# EUROPEAN PATENT SPECIFICATION

(11) **EP 4 506 213 B1**
(45) Date of publication and mention of the grant of the patent: **13.08.2025**
(21) Application number: 24185656.6
(22) Date of filing: 01.07.2024
(51) Int. Cl.: B60R 16/02, G06Q 10/30, G06Q 50/04, H01B 7/36

(54) **RECYCLING SYSTEM AND WIRE HARNESS**
RECYCLINGSYSTEM UND KABELBAUM
SYSTÈME DE RECYCLAGE ET FAISCEAU DE CÂBLES

(30) Priority: 09.08.2023 JP 2023129832
(43) Date of publication of application: 12.02.2025
(73) Proprietor: Yazaki Corporation, Tokyo 108-0075 (JP)
(72) Inventor: Kubokawa, Takeo, Susono-shi, Shizuoka, 410-1194 (JP); Tsubaki, Kazuya, Susono-shi, Shizuoka, 410-1194 (JP)
(74) Representative: Hoffmann Eitle

(56) References cited:
- EP-A1- 0 648 643
- CN-A- 111 695 649
- JP-A- 2002 313 164
- JP-A- 2002 313 165
- JP-A- 2016 189 271
- JP-A- H11 260 151
- US-A1- 2020 251 238

## Description

### TECHNICAL FIELD

The present disclosure relates to a recycling system used for recycling a wire harness, and the wire harness.

### BACKGROUND ART

Generally, a wire harness is recycled in the following procedure.

As a first step, the procedure includes removing the exterior of the wire harness.

As a second step, the procedure includes crushing the wire harness(cutting into small pieces).

As a third step, the procedure includes performing gravity separation which separates a resin (coating for an electric wire and the like) and a metal (including a non-ferrous metal).

As a fourth step, the procedure includes performing magnetic separation or shape separation which separate a metal and a non-ferrous metal.

The material mainly recycled in the wire harness is a conductor (a non-ferrous metal) used in the core wire of the electric wire. There are several types of conductors used in the wire harness (copper, copper alloy, aluminum, aluminum alloy, and the like), and the conductor is selected according to the wire diameter and the application.

In the recycling step, when crushing and separation are carried out as described above, the types of conductors cannot be separated. Therefore, the entire amount of separated conductors is recycled as miscellaneous copper or miscellaneous metals.

The miscellaneous copper does not meet the specification for the automotive electric wire. Therefore, in order to reuse (horizontally recycle) the miscellaneous copper as the electric wire (the core wire) of a new wire harness, a dedicated step is required to melt and refine the miscellaneous copper to extract pure copper. Melting and refining the miscellaneous copper requires a large amount of energy, which increases the amount of CO2 emissions and requires the use of chemicals that have a large environmental impact.

It has been proposed to attach, to a wire harness, a medium (a non-contact IC tag) to which electronic data necessary for recycling, such as the content of a constituent material, is input, and to perform recycling processing suitable for the constituent material (for example, see JP2002-313165A). However, various components and a metal (such as plating) other than the core wire are used for the wire harness. Therefore, since it is not possible to completely perform separation by the type of the conductor based on information on the constituent material alone, the conductor is treated as the miscellaneous copper.

JP 2016 189271 A relates to a technology for easily automating the attachment of a wire harness to a vehicle. A wire harness module includes a wire harness formed in a package shape. Each connector attached to the ends of the wire harness is attached at a specified position in the wire harness, and each fixing component for fixing the wire harness to the vehicles is attached at the specified position in the wire harness. In a tag, specific identification information is recorded on the wire harness. The identification information is used when attached position information showing the attached positions of each connector and each fixing component is acquired.

### SUMMARY OF INVENTION

The present disclosure provides a recycling system that can obtain a highly pure electric wire material free of impurities through recycling, and a wire harness. The present invention is defined in the appended independent claims. Further preferred embodiments are defined in the dependent claims.

According to an illustrative aspect of the present disclosure, a recycling system for a wire harness in which a plurality of electric wires are bundled, includes: a data server configured to store recycle information of the wire harness, the recycle information including conductor information indicating a type of a conductor used for the electric wires and removal information indicating a removal object to be removed from the electric wires; and an identification tag reading device configured to read an identification tag attached to the wire harness and acquire the recycle information from the data server.

According to another illustrative aspect of the present disclosure, a wire harness in which a plurality of electric wires are bundled, includes: an identification tag attached to the wire harness and including access information to a data server. The access information is readable information for accessing the data server configured to store recycle information of the wire harness, the recycle information including conductor information indicating a type of a conductor used for the electric wires and removal information indicating a removal object to be removed from the electric wires.

Since the present disclosure is implemented as described above, it is possible to sort the conductor of the electric wire by the type based on the conductor information, and it is possible to easily remove the component and the portion that contain anything other than pure copper or pure aluminum based on the removal information, thereby obtaining a highly pure electric wire material free of impurities.

### BRIEF DESCRIPTION OF DRAWINGS

FIG. 1 is a diagram showing a system configuration of a recycling system according to the present disclosure;
FIG. 2 is a diagram showing a database example of a data server shown in FIG. 1;
FIG. 3 is a diagram showing a recycling step using the recycling system shown in FIG. 1;
FIG. 4 is a diagram showing a joint portion to be removed; and
FIGS. 5A to 5C are diagrams showing an example of providing removal information shown in FIG. 2 as visual information.

### DESCRIPTION OF EMBODIMENTS

Hereinafter, an embodiment of the present disclosure (hereinafter simply referred to as an "embodiment") will be described in detail with reference to the drawings.

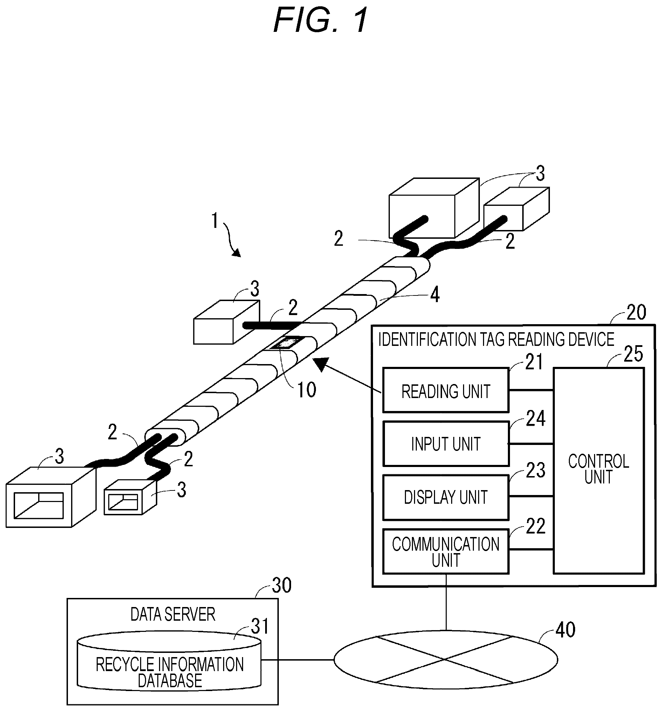

The present embodiment is a recycling system that supports recycling of a wire harness 1. With reference to FIG. 1, the recycling system includes an identification tag reading device 20 and a data server 30.

The wire harness 1 includes a plurality of bundled electric wires 2, and a connector 3, and a terminal and various boxes such as a junction box and a fuse box (which are not shown) are connected to the electric wires 2. The wire harness 1 is wrapped with a tape 4 or a tube (not shown) in order to bundle and protect the electric wire 2. Further, the wire harness 1 is also connected to other components, such as a grommet, a wiring clip, and a protector (not shown).

An identification tag 10 is attached to the wire harness 1. The identification tag 10 is code information such as a two-dimensional barcode. The identification tag 10 includes access information to the data server 30 and specific information (a harness ID, a product number, a lot code, an individual number, a manufacturing date, a shipping date, and the like) for specifying the wire harness 1. The identification tag 10 may be a wireless tag such as an RFID.

The identification tag reading device 20 is a device that reads the specific information and the access information from the identification tag 10, and may be, for example, a handheld code reader. The identification tag reading device 20 includes a reading unit 21, a communication unit 22, a display unit 23, an input unit 24, and a control unit 25.

The reading unit 21 irradiates the identification tag 10 with light and receives the reflected light thereof or the like to read the specific information and the access information.

The communication unit 22 has a data communication function of transmitting and receiving various types of information to and from the data server 30 via a network 40 such as the Internet.

The display unit 23 is implemented by a liquid crystal display or the like, and displays various types of information received from the data server 30.

The input unit 24 includes various operation keys, and receives a reading instruction of the identification tag 10, a switching instruction of various types of information displayed on the display unit 23, and the like.

The control unit 25 is an arithmetic processing circuit such as a microcomputer including a central processing unit (CPU), a read only memory (ROM), a random access memory (RAM), and the like. The ROM stores a control program for controlling the operation of the identification tag reading device 20. The control unit 25 reads the control program stored in the ROM and loads the control program into the RAM to control the identification tag reading device 20.

The data server 30 is an information processing device having a communication function via the network 40. The data server 30 publishes a recycle information database 31 on the network 40 such as the Internet as the recycle information. The content of the data server 30 can be appropriately updated on the supplier side of the wire harness 1, and more detailed information can be added.

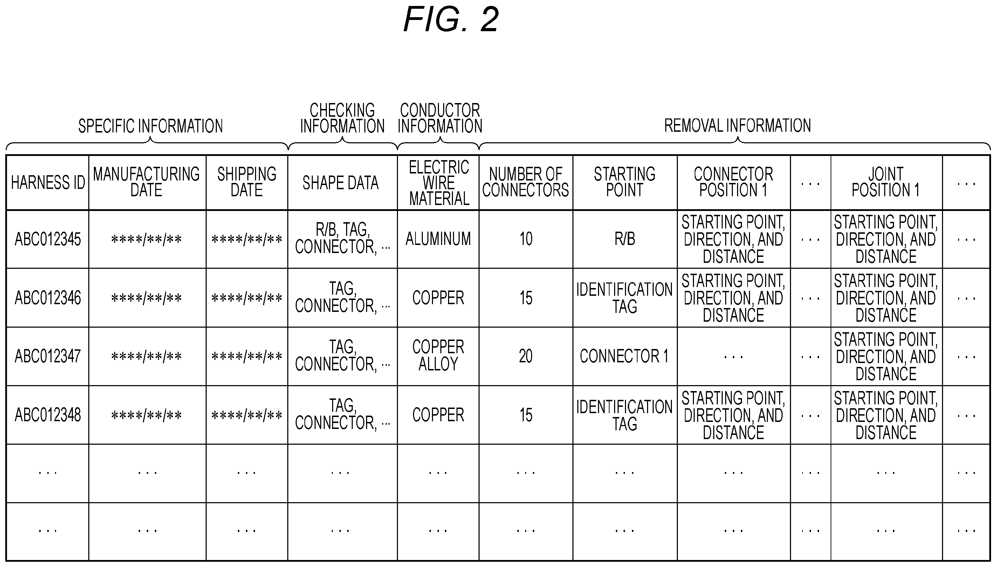

As shown in FIG. 2, the recycle information stored in the recycle information database 31 is various types of information for performing efficient recycling processing of the wire harness 1. The recycle information is, for example, information such as "the harness ID", "the manufacturing date", "the shipping date", "the shape data", "the electric wire material", "the number of connectors", "the starting point", "the connector position", and "the joint position". The "harness ID", the "manufacturing date", and the "shipping date" are stored as the specific information for specifying the wire harness 1. The "shape data" is stored as checking information for checking the wire harness 1 to be recycled. The "electric wire material" is stored as conductor information indicating the type of the conductor used for the electric wire 2. The "number of connectors", the "starting point", the "connector position", and the "joint position" are stored as removal information indicating the position of the removal object to be removed from the electric wire 2. In addition, the recycle information database 31 may store information such as "whether a plated electric wire is present", "the material ratio of a copper alloy or an aluminum alloy", and "the material of a component such as a connector or a terminal, and whether the component is surface-treated (plated)".

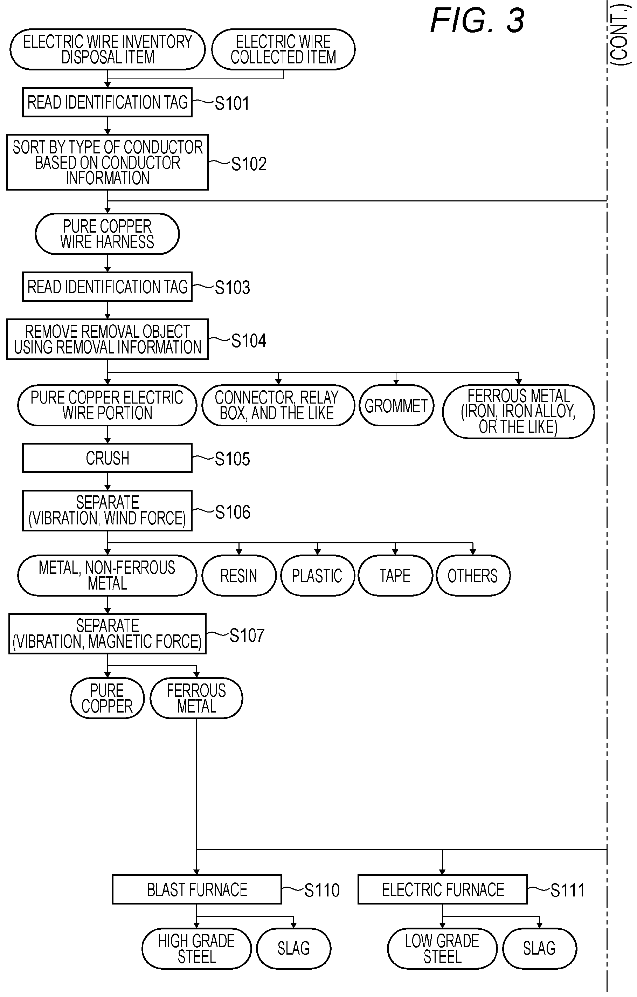

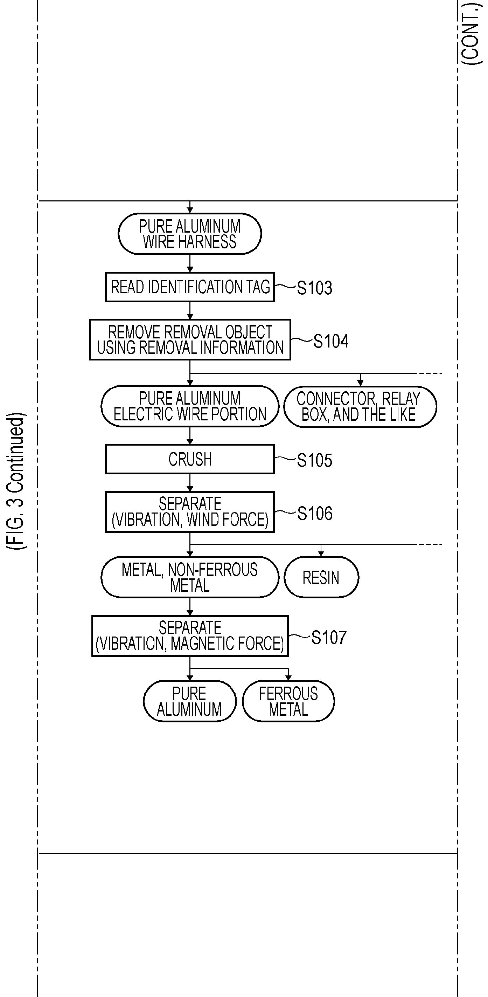

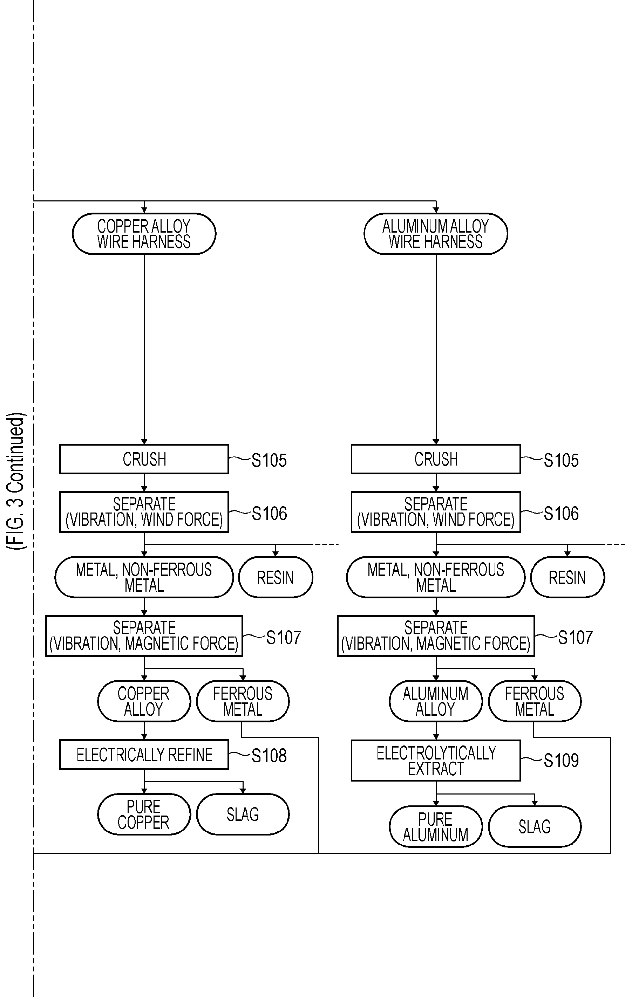

FIG. 3 shows a recycling step using the recycling system according to the present embodiment. The wire harness 1 to be recycled is an inventory disposal item and a collected item used in a scrapped automobile or the like. In recycling, first, a reading step of reading the access information and the specific information of the identification tag 10 attached to the wire harness 1 using the identification tag reading device 20 is executed (step S101). The identification tag reading device 20 accesses the data server 30 based on the access information, acquires the recycle information of the wire harness 1 based on the specific information, and displays the acquired recycle information on the display unit 23.

The next step is a sorting step of sorting the wire harness 1 by the type of the conductor used in the electric wire 2, based on the conductor information included in the recycle information displayed on the display unit 23 (step S102). In the present embodiment, the type of the conductor is sorted from pure copper, pure aluminum, a copper alloy, and an aluminum alloy. The reading step and the sorting step may be automated using a device or the like that reads the identification tag 10 of the wire harness 1 conveyed on the conveyor and that sorts the wire harness 1 by the type of the conductor.

The subsequent recycling steps for the wire harnesses 1 whose conductors are pure copper and pure aluminum are similar. Therefore, the recycling step for the wire harness 1 whose conductor is pure copper will be described below.

A reading step of reading the access information and the specific information of the identification tag 10 attached to the wire harness 1 whose conductor is pure copper using the identification tag reading device 20 is executed (step S103). The identification tag reading device 20 accesses the data server 30 based on the access information, acquires the recycle information of the wire harness 1 based on the specific information, and displays the conductor information and the removal information included in the acquired recycle information on the display unit 23. In the reading step in steps S101 and S103, the display content may be switched on the identification tag reading device 20 side. The dedicated identification tag reading device 20 may be prepared for each step.

The next step is a removal step of removing a removal object containing a material other than the material (the pure copper) of the electric wire 2 based on the recycle information (the removal information) displayed on the display unit 23 (step S104).

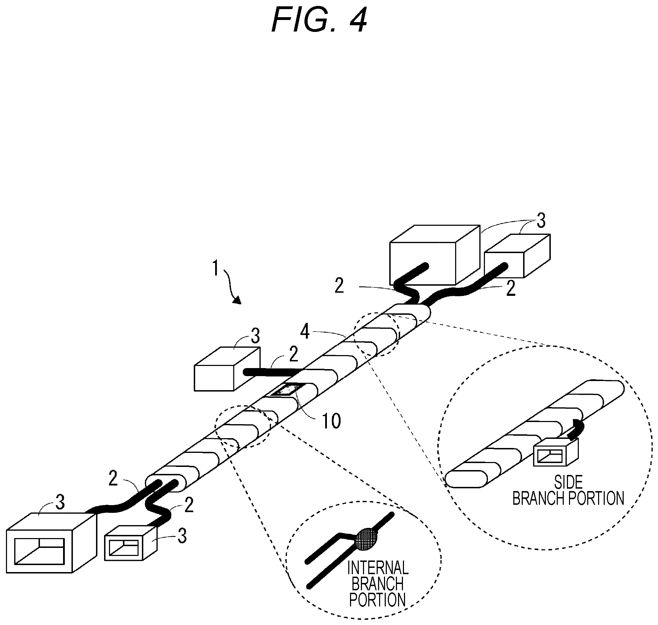

The removal information is information for specifying the position of the removal component, and includes the "starting point", the "connector position", and the "joint position". The "starting point" indicates a component that serves as a reference for specifying the position of the removal object, for example, the identification tag 10, the relay box (R/B), or the grommet. The "connector position" is information for specifying the position of the connector 3 to be removed, and indicates the direction and the distance from the "starting point". As shown in FIG. 4, the "joint position" indicates a joint portion to be removed, such as an internal branch portion (a joint portion using a plating or the like by a crimping terminal) or a side branch portion (a portion where an option connector or the like is wrapped with the tape 4 or a tube). In addition, the removal information may include the "terminal position", the "box position", and the like as a component to be removed.

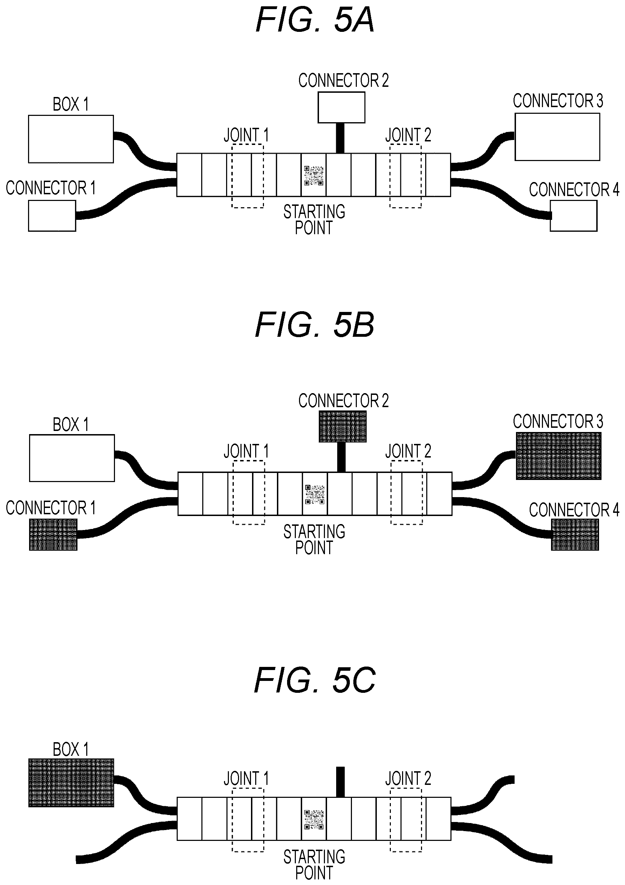

The recycle information database 31 may provide the visual information as shown in FIG. 5A as the removal information. In this case, the recycle information database 31 stores the visual information such as an image or a video representing the shape of the wire harness 1, and provides the visual information to the identification tag reading device 20. Based on the visual information, the starting point and the efficient arrangement of the wire harness 1 can be easily grasped.

Further, the recycle information database 31 may provide the visual information as shown in FIGS. 5B and 5C as the removal information. In this case, the recycle information database 31 stores the visual information such as the image and the video indicating the removal object of the wire harness 1, and provides the visual information to the identification tag reading device 20. According to the visual information, the removal object can be easily grasped, and the work efficiency can be improved.

The electric wire 2 from which the removal object is removed in the removal step is subjected to a fine crushing step (step S105) of cutting the electric wire 2 into small pieces, and then to a conductor separation step (step S106) of separating the electric wire 2 by vibration, a wind force, or the like. In the conductor separation step, metals (pure copper and a ferrous metal) are separated from other materials such as a resin, a plastic, a tape, and others.

The metals (the pure copper and the ferrous metal) after the conductor separation step are subjected to an iron separation step (step S107) of performing separation by vibration, a magnetic force, or the like to separate the pure copper and the ferrous metal.

The pure copper separated through the conductor separation step becomes a highly pure electric wire material free of impurities. Therefore, the separated pure copper can be directly used for horizontal recycling without consuming extra energy and labor. In the wire harness 1 whose conductor is pure aluminum, the pure aluminum is obtained through the conductor separation step.

The wire harness 1 whose conductor is a copper alloy is subjected to the fine crushing step (step S105) of directly cutting the wire harness 1 into small pieces, and then to the conductor separation step (step S106) of separating the wire harness 1 by vibration, a wind force, or the like. In the conductor separation step, metals (a copper alloy and a ferrous metal) are separated from other materials such as the resin, the plastic, the tape, and others.

The metals (the copper alloy and the ferrous metal) after the conductor separation step are subjected to the iron separation step (step S107) of performing separation by vibration, a magnetic force, or the like to separate the copper alloy and the ferrous metal.

The copper alloy separated in the iron separation step may be recycled as pure copper by performing an electrical refining step (step S108). In this case, since the step is performed in the state of being separated into the copper alloy, it is also possible to reduce the amount of electric power usage and the amount of use of the chemical that has a large environmental impact.

The wire harness 1 whose conductor is an aluminum alloy is subjected to the fine crushing step (step S105) of directly cutting the wire harness 1 into small pieces, and then to the conductor separation step (step S106) of separating the wire harness 1 by vibration, a wind force, or the like. In the conductor separation step, metals (an aluminum alloy and a ferrous metal) are separated from other materials such as the resin, the plastic, the tape, and others.

The metals (the aluminum alloy and the ferrous metal) after the conductor separation step are subjected to the iron separation step (step S107) of performing separation by vibration, a magnetic force, or the like to separate the aluminum alloy and the ferrous metal.

The aluminum alloy subjected to the iron separation step may be recycled as pure aluminum by performing the electrolytic extraction step (step S109). In this case, since the step is performed in the state of being separated into the aluminum alloy, it is also possible to reduce the amount of electric power usage and the amount of use of the chemical that has a large environmental impact.

The ferrous metal separated in the iron separation step for each material sorted in the sorting step is recycled as high grade steel by performing a blast furnace refining step (step S110) of melting the ferrous metal using a blast furnace, so that the impurities can be discharged as slag. The separated ferrous metal is recycled as low grade steel by performing an electric furnace refining step (step S111) of melting the ferrous metal using an electric furnace, so that the impurities can be discharged as slag.

As described above, the present embodiment is a recycling system for a wire harness 1 in which a plurality of electric wires 2 are bundled. The recycling system includes: a data server 30 configured to store conductor information and removal information as recycle information of the wire harness 1; and an identification tag reading device 20 configured to acquire the recycle information from the data server 30. The conductor information indicates the type of the conductor used for the electric wire 2. The removal information indicates a removal object to be removed from the electric wire 2.

According to this configuration, it is possible to sort the conductor of the electric wire 2 by the type based on the conductor information, and it is possible to easily remove the component and the portion that contain anything other than the pure copper or the pure aluminum based on the removal information. Accordingly, it is possible to obtain a highly pure electric wire material free of impurities, and it is possible to directly use the electric wire material for horizontal recycling without consuming extra energy and labor. Horizontal recycling is possible by eliminating the step of improving the purity and using a step optimized for each conductor material, which can be useful in manufacturing the environmentally friendly wire harness 1.

Further, in the present embodiment, the removal information includes position information indicating a position of the removal object.

According to this configuration, since the position of the removal object is known, it is possible to more easily remove the component and the portion that contain anything other than the pure copper or the pure aluminum.

Further, in the present embodiment, the removal information includes a direction and a distance from a starting point.

According to this configuration, it is easy to specify the positions of the component and the portion that contain anything other than the pure copper or the pure aluminum.

Further, in the present embodiment, the removal information includes visual information representing a shape of the wire harness 1.

According to this configuration, it is possible to visually grasp the arrangement of the wire harness 1 and to improve the work efficiency.

Further, in the present embodiment, the removal information includes visual information indicating the removal object.

According to this configuration, the removal object can be visually grasped, and the work efficiency of the step of removing the removal object can be improved.

The present embodiment is a wire harness 1 in which a plurality of electric wires 2 are bundled. An identification tag 10 including access information to a data server 30 is attached to the wire harness 1. The data server 30 stores, as recycle information, conductor information indicating a type of a conductor used for the electric wire 2 and removal information indicating a position of a removal object to be removed from the electric wire 2.

According to this configuration, the recycle information can be accessed only by reading the identification tag 10, and the wire harness 1 can be easily sorted by the type of the conductor of the electric wire 2.

The present disclosure has been described above based on the embodiment. This embodiment is merely an example, and it will be understood by those skilled in the art that various modifications are possible in the combination of the components, and that the modifications are also within the scope of the appended claims.

## Claims

1. A recycling system for a wire harness (1) in which a plurality of electric wires (2) are bundled, the recycling system **characterized in that** it comprises:
a data server (30) configured to store recycle information of the wire harness (1), the recycle information including conductor information indicating a type of a conductor used for the electric wires (2) and removal information indicating a removal object to be removed from the electric wires (2); and
an identification tag reading device (20) configured to read an identification tag (10) attached to the wire harness (1) and acquire the recycle information from the data server (30).

2. The recycling system according to claim 1, wherein
the removal information includes position information indicating a position of the removal object.

3. The recycling system according to claim 2, wherein
the position information includes a direction and a distance from a starting point of the removal object.

4. The recycling system according to any one of claims 1 to 3, wherein
the removal information includes visual information representing a shape of the wire harness (1).

5. The recycling system according to any one of claims 1 to 4, wherein
the removal information includes visual information indicating the removal object.

6. A wire harness (1) in which a plurality of electric wires (2) are bundled, the wire harness (1) **characterized in that** it comprises :
an identification tag (10) attached to the wire harness (1) and including access information to a data server (30), wherein
the access information is readable information for accessing the data server (30) configured to store recycle information of the wire harness (1), the recycle information including conductor information indicating a type of a conductor used for the electric wires (2) and removal information indicating a removal object to be removed from the electric wires (2).

## Patentansprüche

1. Recyclingsystem für einen Kabelbaum (1), in dem eine Vielzahl von elektrischen Leitungen (2) gebündelt ist, wobei das Recyclingsystem **dadurch gekennzeichnet ist, dass** es Folgendes umfasst:
einen Datenserver (30), der so konfiguriert ist, dass Recycleinformationen des Kabelbaums (1) speichert, wobei die Recycleinformationen Leiterinformationen einschließen, die einen für die elektrischen Leitungen (2) verwendeten Leitertyp angeben, und Entnahmeinformationen, die ein Entnahmeobjekt angeben, das aus den elektrischen Leitungen (2) entnommen werden soll; und
eine Lesevorrichtung (20) für Identifizierungsetiketten, die so konfiguriert ist, dass sie ein Identifizierungsetikett (10) liest, das an den Kabelbaum (1) befestigt ist und die Recycleinformationen aus dem Datenserver (30) abruft.

2. Recyclingsystem nach Anspruch 1, wobei
die Entnahmeinformationen Positionsinformationen einschließen, die eine Position des Entnahmeobjekts angeben.

3. Recyclingsystem nach Anspruch 2, wobei
die Positionsinformationen eine Richtung und einen Abstand von einem Anfangspunkt des Entnahmeobjekts einschließen.

4. Recyclingsystem nach einem der Ansprüche 1 bis 3, wobei
die Entnahmeinformationen visuelle Informationen einschließen, die eine Form des Kabelbaums (1) darstellen.

5. Recyclingsystem nach einem der Ansprüche 1 bis 4, wobei
die Entnahmeinformationen visuelle Informationen einschließen, die das Entnahmeobjekt angeben.

6. Kabelbaum (1), in dem eine Vielzahl von elektrischen Leitungen (2) gebündelt ist, wobei der Kabelbaum (1) **dadurch gekennzeichnet ist, dass** er Folgendes umfasst:
ein Identifizierungsetikett (10), das am Kabelbaum (1) befestigt ist und Zugangsinformationen zu einem Datenserver (30) einschließt, wobei
die Zugangsinformationen lesbare Informationen zum Zugreifen auf den Datenserver (30) sind, der so konfiguriert ist, dass er Recycleinformationen des Kabelbaums (1) speichert, wobei die Recycleinformationen Leiterinformationen einschließen, die einen für die elektrischen Leitungen (2) verwendeten Leitertyp angeben, und Entnahmeinformationen, die ein Entnahmeobjekt angeben, das aus den elektrischen Leitungen (2) entnommen werden soll.

## Revendications

1. Système de recyclage pour un faisceau de câbles (1) dans lequel une pluralité de fils électriques (2) est regroupée, le système de recyclage étant **caractérisé en ce qu'**il comprend :
un serveur de données (30) configuré pour stocker des informations de recyclage du faisceau de câbles (1), les informations de recyclage incluant des informations de conducteur indiquant un type de conducteur utilisé pour les fils électriques (2) et des informations de retrait indiquant un objet de retrait à retirer des fils électriques (2) ; et
un dispositif de lecture d'étiquette d'identification (20) configuré pour lire une étiquette d'identification (10) attachée au faisceau de câbles (1) et acquérir les informations de recyclage à partir du serveur de données (30).

2. Système de recyclage selon la revendication 1, dans lequel
les informations de retrait incluent des informations de position indiquant une position de l'objet de retrait.

3. Système de recyclage selon la revendication 2, dans lequel
les informations de position incluent une direction et une distance par rapport à un point de départ de l'objet de retrait.

4. Système de recyclage selon l'une quelconque des revendications 1 à 3, dans lequel
les informations de retrait incluent des informations visuelles représentant une forme du faisceau de câbles (1).

5. Système de recyclage selon l'une quelconque des revendications 1 à 4, dans lequel
les informations de retrait incluent des informations visuelles indiquant l'objet de retrait.

6. Faisceau de câbles (1) dans lequel une pluralité de fils électriques (2) est regroupée, le faisceau de câbles (1) étant **caractérisé en ce qu'**il comprend :
une étiquette d'identification (10) attachée au faisceau de câbles (1) et incluant des informations d'accès à un serveur de données (30), dans lequel
les informations d'accès sont des informations lisibles pour accéder au serveur de données (30) configuré pour stocker des informations de recyclage du faisceau de câbles (1), les informations de recyclage incluant des informations de conducteur indiquant un type de conducteur utilisé pour les fils électriques (2) et des informations de retrait indiquant un objet de retrait à retirer des fils électriques (2).
